# EUROPEAN PATENT APPLICATION

(11) **EP 2 566 179 A1**
(43) Date of publication of application: **06.03.2013**
(21) Application number: 11306092.5
(22) Date of filing: 02.09.2011
(51) Int. Cl.: H04N 21/81, H04N 21/454, H04N 21/2543, H04N 21/643

(54) **Blocking superimposed images in multiscreen environment**

(71) Applicant: Alcatel Lucent, 75007 Paris (FR)
(72) Inventor: Rajapandiyan, Karthick, 600044 Chennai, Tamil Nadu (IN); Muthusamy, Muthiah, 600099 Chennai, Tamil Nadu (IN)
(74) Representative: Sciaux, Edmond

(57) **Abstract**

Blocking superimposed images in multiscreen environment is disclosed. The present invention relates to providing supplementary services in multiscreen environment and, more particularly, to blocking of superimposed images in multiscreen environment. The method allows the user to block any superimposed content from the IPTV content by sending a request for registration for the service. Once the user is registered for the service, the user's profile is updated indicating that the user has registered for superimposed content blocking. Further, a DSB bit is set for the user on his profile. When the user tries to access IPTV content user profile is sent to the client device. The client device then filters the superimposed content from the IPTV content. Thus eliminating undesired superimposed content.

## Description

### TECHNICAL FIELD

The present invention relates to providing supplementary services in multiscreen environment and, more particularly, to blocking of superimposed images in multiscreen environment.

### BACKGROUND

Emerging trends in technology have resulted in offering a wide variety of Internet based services to users. Internet Protocol (IP) television or IPTV is one of such widely employed services. IPTV has emerged as the most preferred means of digital broadcast. IPTV provides different supplementary or Value Added Services (VAS) to the users. The supplementary services include Video on Demand (VoD), live recording of channels, electronic program guide and so on to name a few. In addition, IPTV also provides superimposed content to the users on their television screen for better viewing experience. The superimposed content may include subtitles, images, advertisements, texts and so on.

Although such superimposed content may enhance the viewing experience of the user in some case, they may not be always preferred. For example, there may be a scenario wherein a particular user may wish to block or remove such superimposed content from his viewed content. This may be because such superimposed content may not be preferred for viewing. In another example, considering a scenario where a user may want to view an on going football match. But the channel may contain some random ads being superimposed along with the channel content in such a case, the user may wish to remove the ad content to have a more pleasurable viewing experience. In another case, it may be possible that some text message running along the channel content may not be suitable for a child and hence the user may wish to remove the message. Existing IPTV services do not facilitate means in order to remove such undesirable superimposed content from the channel content. As a result, the user will have to block the channel as a whole if he does not wish to view the content being displayed on the channel.

Further, certain mechanisms have been developed in order to block undesirable superimposed content from channel content. However, such mechanisms involve performing filtering or blocking at the operator end. That is, the service provider or the operator is provided with the control in order to receive request from the user and then perform the filtering or blocking function for the requested channel so that the superimposed content is not displayed for the requested channel. Such mechanisms do not allow the service to be user interactive. On the other hand, the user would prefer a service wherein the control is provided at the user end. Present day mechanisms do not provide such a blocking feature at the user end.

In another example, a user may be operating in a multiscreen environment. A multiscreen environment is one in which a plurality of client devices may be connected to a common user profile and they may be sharing the service on all such devices. In such a case, it may be preferred to have the control at client device as the device profiles are common. However, due to lack of such a blocking or filtering mechanism the user will have to send a request to the service provider or will have to block the channel as whole from being streamed. This process may not be desirable to the user. Due to the aforementioned drawbacks the superimposed image blocking feature in IPTV service is not effective.

### SUMMARY

In view of the foregoing, an embodiment herein provides a system for blocking superimposed content in IPTV in a multiscreen environment. The system comprise at least one client device configured for sending a request message for registering for a service for blocking the superimposed content, checking if a Default Subtitle Bit (DSB) is set on receiving a response message from a middleware server, configuring itself if the DSB bit is set and blocking the superimposed content from a channel before displaying the content to a user. A middleware server, where the server is configured for sending the request message obtained from the client device to a database, updating the user's profile on the database, informing a billing service to charge the user for the blocking service and forwarding the response message from the database to the client device. The client device is at least one of mobile device, laptop, desktop, television, Set top Box, media box. The middleware server is at least one of IPTV middleware server, OTT middleware server, mobile TV middleware server. The client device identifies the channel id for which superimposed content is blocked during the configuration. The database maintains a common profile for the user for different client devices accessed by the user. The superimposed content is at least one of subtitles, images, advertisements, text messages.

Embodiments further disclose a client device for blocking superimposed content in IPTV in a multiscreen environment. The client device is configured for sending a request message for registering for a service for blocking the superimposed content, checking if a Default Subtitle Bit (DSB) is set on receiving a response message from a middleware server, configuring itself if the DSB bit is set and blocking the superimposed content from a channel before displaying the content to a user. The client device is at least one of IPTV middleware server, OTT middleware server, mobile TV middleware server. The client device determines the id for the channel for which blocking service is requested during the configuration. The client device further provides the option to de-activate the blocking service for a particular content for a specified time period. The client device further stores user profile obtained from the middleware server during the configuration.

Embodiments herein also disclose a middleware server for blocking superimposed content in IPTV in a multiscreen environment. The server configured for sending a request message obtained from a client device to a database, updating a user's profile on the database, informing a billing service to charge the user for the blocking service and forwarding the response message from the database to the client device. The middleware server is one of IPTV middleware server, OTT middleware server, mobile TV middleware server. The middleware server further sends the user profile details to the client device. The middleware server further updates the client profile on all of the client devices that are operating in the multiscreen environment.

Also, disclosed herein is a method for blocking superimposed content in IPTV in a multiscreen environment. The method comprising sending a request message for registering for blocking the superimposed content by a client device, updating a user's profile on a database by a middleware server on receiving the request message, sending a message to a billing server by the middleware server for charging the user, sending user's profile to the client device by the middleware server on invocation of the service on the client device, performing configuration by the client device on obtaining the user's profile and blocking the superimposed content for a requested channel by the client device before displaying the channel content. The client device is one of mobile device, laptop, desktop, television, Set top Box, media box. The middleware server is at least one of IPTV middleware server, OTT middleware server, mobile TV middleware server. The configuration comprising step of identifying channel id for which superimposed content is desired to be blocked by the user. The method further comprises maintaining a common profile for the user for different client devices accessed by the user. The superimposed content is at least one of subtitles, images, advertisements, text messages.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:

FIG. 1 illustrates a multiscreen environment employing superimposed content blocking, according to an embodiment herein;

FIG. 2 depicts a client device, according to an embodiment herein;

FIG. 3 illustrates the process of registration for blocking superimposed content in a multiscreen environment, according to an embodiment herein; and

FIG. 4 illustrates the process of invocation of blocking mechanism in multiscreen environment.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

A system and method for blocking superimposed content in IPTV in a multiscreen environment is disclosed. The method allows a user who is operating in a mutliscreen environment to block or filter unwanted superimposed content from the content viewed by him. A multiscreen environment may be defined as an environment wherein there are multiple client devices that are associated with a same user profile. The multiscreen environment offers an integrated video viewing experience on all of the client devices. For example, if a user A has three client devices then in mutliscreen environment there will be a single profile associated for all the three devices of user A. So if user A makes some settings or changes on one of the client device these change will be automatically be reflected on the other client devices. In an embodiment, the superimposed content may be subtitles, images, ads, text messages and the like.

The method allows the user to block any superimposed content from the IPTV content by sending a request for registration for the service. Once the user is registered for the service, the user's profile is updated indicating that the user has registered for superimposed content blocking. The method then provides the control at the user's client device. That is, when the IPTV content is streamed to the client device, the client device is provided with the intelligence in order to identify if the streamed content contains superimposed content within it. If the streamed IPTV content contains the superimposed content the client device filters the superimposed content and then streams the desired IPTV content without the superimposed content. Further, if the user views the IPTV content on any of his other devices the mechanism ensures that the IPTV content is delivered without the superimposed content. As a result, the method identifies the client devices associated with a particular user's profile and thus enables the client device to remove the superimposed content from the IPTV content.

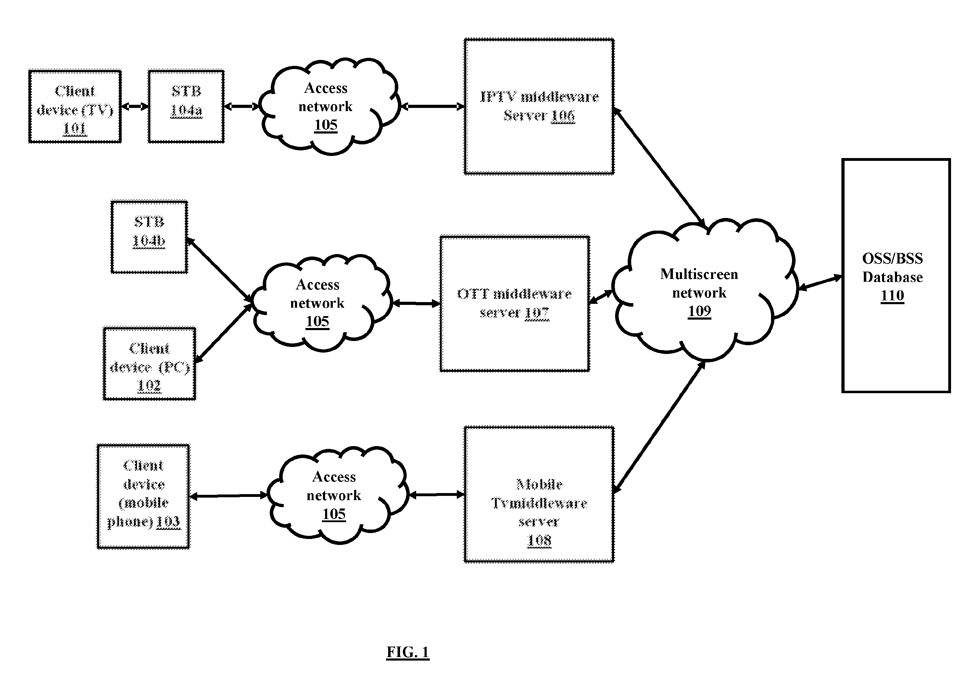

FIG. 1 illustrates a multiscreen environment employing superimposed content blocking, according to an embodiment herein. The multiscreen environment comprises of a plurality of client devices that may be associated with the same user. As depicted the client devices include television 101, Personal Computer (PC) 102, Mobile phone 103. The TV 101 is connected through the Set Top Box (STB) 104a. Another STB 104b also connects to one of the client devices. The client devices 101, 102, 103 are connected to their respective access networks 105. The access networks 105 then connect to respective middleware servers depending on the type of client device 101, 102, 103. In this case, if the client device is IPTV 101 the access network 105 connects to IPTV middleware server 106, if the client device is PC 102 then the access network 105 connects to an OTT middleware server 107 and if the client device is a mobile phone 103 then the access network 105 connects to mobile TV middleware server 108. The middleware servers 106, 107, 108 further connect to OSS/BSS database 110 through a middleware network 109.

The client devices 101, 102 and 104 may belong to a same user and hence a single user profile may be maintained for all the client devices 101, 102, 103 by the server. All client devices 101, 102, 103 are linked by a common profile for the user in a multiscreen environment. Such a multiscreen environment offers an integrated video viewing experience on all client devices 101, 102, 103.

The middleware servers 106, 107 and 108 act as an intermediate means that connects the client device 101, 102, 103 to the OSS/BSS database 110. The middleware servers 106, 107 and 108 forward and receive messages between the client devices and the database 110. The middleware servers 106, 107 and 108 also informs the billing server when the user registers for the superimposed content blocking mechanism and thus ensures that the client is charged for the service accordingly.

The database 110 obtains information from the middleware servers 106, 107 and 108 and updates the user's profile details stored on it. The database 110 also sets a bit on itself called Default Subtitle Block (DSB). When the user registers for the superimposed content blocking service this DSB bit is set on his profile and thus ensures that any superimposed content like subtitles and so on are to be blocked for the respective user. Further, the database 110 also sends the profile details to the client device 101, 102, 103 of the user on invocation of the content. This further ensures that the filtering is done at the client device for the respective user.

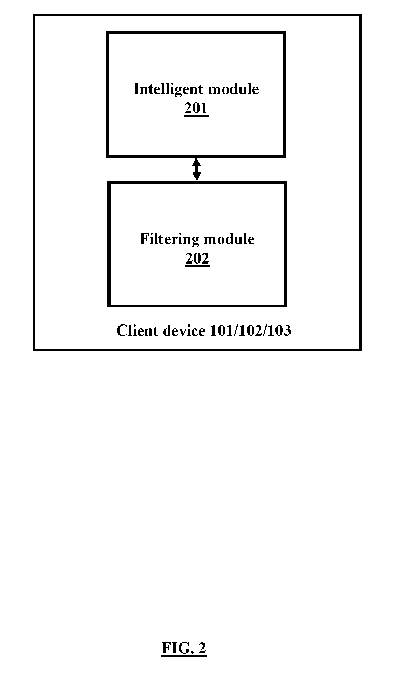

FIG. 2 depicts a client device, according to an embodiment herein. The client device as depicted may be a PC, TV, mobile phone and the like. The figure depicts the intelligent module 201 and a filtering module 202. The intelligent module 201 is provided with intelligent for performing control operations. The filtering module 202 is configured for blocking or filtering of the superimposed content based on the instructions from the intelligent module 201. No other modules have been depicted however; this does not aim to limit the scope of the application. The intelligent module 201 resides within the client device 101, 102, 103. The intelligent module 201 is configured for blocking the undesired content. Once the user registers for the service, his profile is updated on the OSS/BSS database 110 and the DSB bit is set for the user. Further, when the user invokes the service by making a request for some IPTV content the OSS/BSS database 110 sends the user's profile details to the middleware server 106, 107, 108. The middleware server 106, 107 and 108 then sends the profile details to the client device 101, 102, 103. The intelligent module 201 on the client device 101, 102, 103 makes a check if the bit is set for the user. If the DSB is set then the intelligent module invokes the filtering module 202. The filtering module 202 then filters the undesired content and eliminates the superimposed content from the IPTV content. This ensures that only IPTV content is streamed to the user without the display of subtitles, images, ads, text and so on.

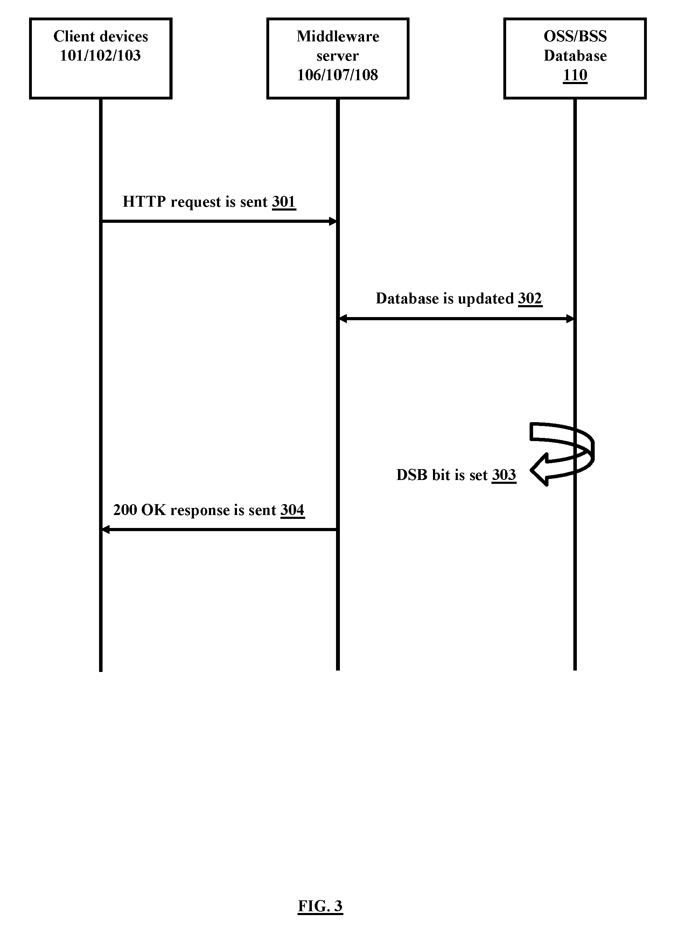

FIG. 3 illustrates the process of registration for blocking superimposed content in a multiscreen environment, according to an embodiment herein. The embodiment depicts a scenario of various client devices 101, 102, 103 registering for the superimposed content blocking service. The client device 101, 102, 103 may be any of PC, IPTV, mobile phone and so on, the middleware server may be an IPTV middleware server 106, OTT middleware server 107 or mobile TV middleware server 108. The BSS/OSS database 110 is the common database that stores and updates user profile details. A client devices 101, 102, 103 in multiscreen environment that have same profile may active the service by enabling the service in options settings of his client device. Once the option is enabled on the user device a request is invoked and the request is sent (301) to an appropriate middleware server 106, 107, 108. The request is in the form of a HTTP request. When the middleware server 106, 107, 108 receives the request, the middleware server 106, 107, 108 sends a signal to the billing server. The billing server is indicated that the particular user has activated the service and is to be charged accordingly for the service. Further, the middleware server 106, 107, 108 sends a message to the database 110 and updates (302) user profile on the database 110. During this update, a Default Subtitle Block (DSB) bit is set (303) for the user on his profile. This bit gives an indication that superimposed content or subtitle blocking is active for the user. Further, when one of the client device 101, 102, 103 tries to access IPTV content the user profile stored on the OSS/BSS database 110 is sent to the client device 101, 102, 103 and the filtering or blocking happens at the client device 101, 102, 103 end. In an embodiment, if any of the client devices are online during activation then the middleware server 106, 107, 108 updates the user profile on the client device 101, 102, 103. For example, if PC 102 and mobile phone are 103 online during the activation then OTT server 107 updates the user profile on the PC 102 and mobile server 108 updates the user profile on mobile phone 103. Hence, the feature is activated simultaneously on the entire client device 101, 102, 103.

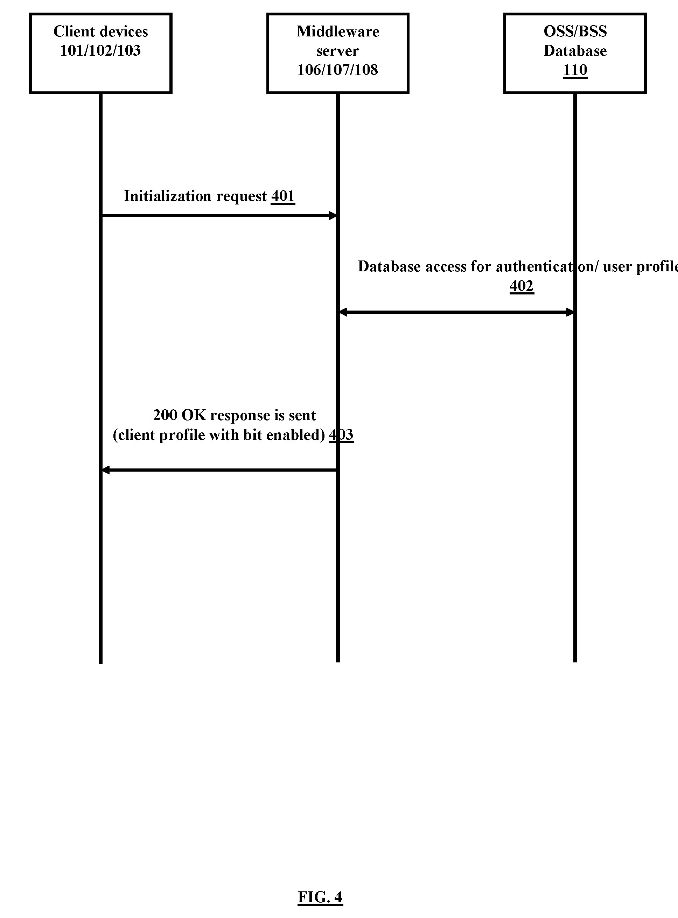

FIG. 4 illustrates the process of invocation of blocking mechanism in multiscreen environment. When the client device 101, 102, 103 tries to access IPTV content an initialization request is sent (401) by the intelligent module 201 residing on the client device to the appropriate middleware server. The middleware server contacts the OSS/BSS database 110 and fetches (402) user profile stored on the OSS/BSS database 110. The user profile is sent to the client device after authentication. The response is in the form of 200 OK message. At the client end, the client device 101, 102, 103 stores (403) the received user profile and initializes itself. Further, when the user is viewing any channel or videos content on his device the client device 101, 102, 104 checks if the DSB bit is set, if the bit is set the superimposed content such as subtitle, ads and so on are not displayed.

In an embodiment, the user may wish to deactivate the service for any particular video or content being watched. In such a case the user may just send a request to deactivate the service. The DSB bit is then disabled for that particular content and hence the content is streamed on his device along with the superimposed content that may be subtitles, ads and so on.

In an embodiment, the middleware server's of different client devices may be replaced by a common server that acts as a convergent server and that is configured to perform the functionality of mobile TV server, OTT server and IPTV server. In such a case, various middleware servers are replaced by the common server which connects the client devices to the common database 110.

The embodiments disclosed herein can be implemented through at least one software program running on at least one hardware device and performing network management functions to control the network elements. The network elements shown in Fig. 1 include blocks which can be at least one of a hardware device, or a combination of hardware device and software module.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the claims as described herein.

## Claims

1. A system for blocking superimposed content in IPTV in a multiscreen environment, said system comprising
at least one client device configured for
sending a request message for registering for a service for blocking said superimposed content;
checking if a Default Subtitle Bit (DSB) is set on receiving a response message from a middleware server;
configuring itself if said DSB bit is set; and
blocking said superimposed content from a channel before displaying said content to a user;
at least one middleware server, where said server is configured for
sending said request message obtained from said client device to a database;
updating said user's profile on said database;
informing a billing service to charge said user for said blocking service; and
forwarding said response message from said database to said client device.

2. The system as in claim 1, wherein said client device is at least one of mobile device, laptop, desktop, television, Set top Box, media box.

3. The system as in claim 1, wherein said middleware server is at least one of IPTV middleware server, OTT middleware server, mobile TV middleware server.

4. The system as in claim 1, said client device identifies the channel id for which superimposed content is blocked during said configuration.

5. The system as in claim 1, wherein said database maintains a common profile for said user for different client devices accessed by said user.

6. The system as in claim 1, wherein said superimposed content is at least one of subtitles, images, advertisements, text messages.

7. A client device for blocking superimposed content in IPTV in a multiscreen environment, where said client device is configured for
sending a request message for registering for a service for blocking said superimposed content;
checking if a Default Subtitle Bit (DSB) is set on receiving a response message from a middleware server;
configuring itself if said DSB bit is set; and
blocking said superimposed content from a channel before displaying said content to a user.

8. The client device as in claim 7, wherein said client device is at least one of TV, Personal computer, mobile TV.

9. The client device as in claim 7, wherein said client device determines the id for the channel for which blocking service is requested during said configuration.

10. The client device as in claim 7, wherein said client device further provides the option to de-activate said blocking service for a particular content for a specified time period.

11. The client device as in claim 7, wherein said client device further stores user profile obtained from said middleware server during said configuration.

12. A middleware server for blocking superimposed content in IPTV in a multiscreen environment, said server configured for
sending a request message obtained from a client device to a database; updating a user's profile on said database;
informing a billing service to charge said user for said blocking service; and
forwarding said response message from said database to said client device.

13. The middleware server as in claim 12, wherein said server is at least one of IPTV middleware server, OTT middleware server, mobile TV middleware server.

14. The middleware server as in claim 12, wherein said server further sends said user profile details to said client device.

15. The middleware server as in claim 12, wherein said server further updates said client profile on all of the client devices that are operating in said multiscreen environment.

16. A method for blocking superimposed content in IPTV in a multiscreen environment, said method comprising
sending a request message for registering for blocking said superimposed content by a client device;
updating a user's profile on a database by a middleware server on receiving said request message;
sending a message to a billing server by said middleware server for charging said user;
sending user's profile to said client device by said middleware server on invocation of said service on said client device;
performing configuration by said client device on obtaining said user's profile; and
blocking said superimposed content for a requested channel by said client device before displaying said channel content.

17. The method as in claim 16, wherein said client device is at least one of mobile device, laptop, desktop, television, Set top Box, media box.

18. The method as in claim 16, wherein said middleware server is at least one of IPTV middleware server, OTT middleware server, mobile TV middleware server.

19. The method as in claim 16, wherein said configuration comprising step of identifying channel id for which superimposed content is desired to be blocked by said user.

20. The method as in claim 16, wherein said method further comprises maintaining a common profile for said user for different client devices accessed by said user.

21. The method as in claim 16, wherein said superimposed content is at least one of subtitles, images, advertisements, text messages.
